# FASCICULE DE BREVET EUROPEEN

(11) **EP 2 189 313 B1**
(45) Date de publication et mention de la délivrance du brevet: **04.07.2012**
(21) Numéro de dépôt: 09176687.3
(22) Date de dépôt: 20.11.2009
(51) Int. Cl.: B60J 7/02, B60J 1/16

(54) **Dispositif d'obturation d'une baie ménagée dans un véhicule automobile, à élément de retenue rapporté par collage, procédé et véhicule correspondant**
Vorrichtung zum Verschließen einer Öffnung eines Kraftfahrzeugs, die mit einem Halterungselement ausgestattet ist, das durch Kleben befestigt ist, entsprechendes Verfahren und Fahrzeug
Device for closing a bay made in an automobile with a restraint element added by gluing, corresponding method and automobile

(30) Priorité: 20.11.2008 FR 0857892; 02.12.2008 FR 0858209
(43) Date de publication de la demande: 26.05.2010
(73) Titulaire: Advanced Comfort Systems France SAS - ACS France, 79300 Bressuire (FR)
(72) Inventeur: Tarzaim, Karim, 85200 Fontenay le Comte (FR)
(74) Mandataire: Bioret, Ludovic

(56) Documents cités:
- EP-A- 1 516 990
- US-A1- 2005 252 090

## Description

### 1. Domaine de l'invention

Le domaine de l'invention est celui des baies de véhicules automobiles. Plus précisément, l'invention concerne les dispositifs d'obturation d'une baie ménagée dans la carrosserie d'un véhicule, et comprenant une partie fixe rapportée de façon affleurante sur la carrosserie, par collage, et une partie mobile coulissante, essentiellement vitrée, susceptible de libérer ou de fermer une ouverture ménagée dans la partie fixe.

Par coulissant on entend dans la présente demande de brevet aussi bien le cas où la partie mobile reste en permanence parallèle à un plan de référence (décomposition de son déplacement en deux mouvements rectilignes) ou présente un déplacement louvoyant.

L'invention s'applique notamment aux pavillons en verre, équipés d'un ouvrant.

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite dans les documents de brevet EP-0 778 168 et EP-0 857 844, au nom du même titulaire que la présente demande de brevet. Le dispositif d'obturation présenté dans ces documents (appelé par la suite « baie flush ») comprend une partie fixe comportant une portion vitrée, et une partie essentiellement vitrée mobile par rapport à la partie fixe. La partie mobile est reliée à la partie fixe par des éléments fonctionnels (rails) qui permettent la mobilité requise et qui sont rapportés sur la face de la partie fixe tournée vers l'intérieur du véhicule.

Sur le plan esthétique, la baie « flush » présente, vue de l'extérieur, un aspect lisse, affleurant avec la carrosserie, du fait qu'aucun cadre n'est nécessaire. Un aspect affleurant est également obtenu entre la partie fixe et la partie mobile, lorsque celle-ci est fermée, par la présence de moyens la ramenant dans le plan de la partie fixe.

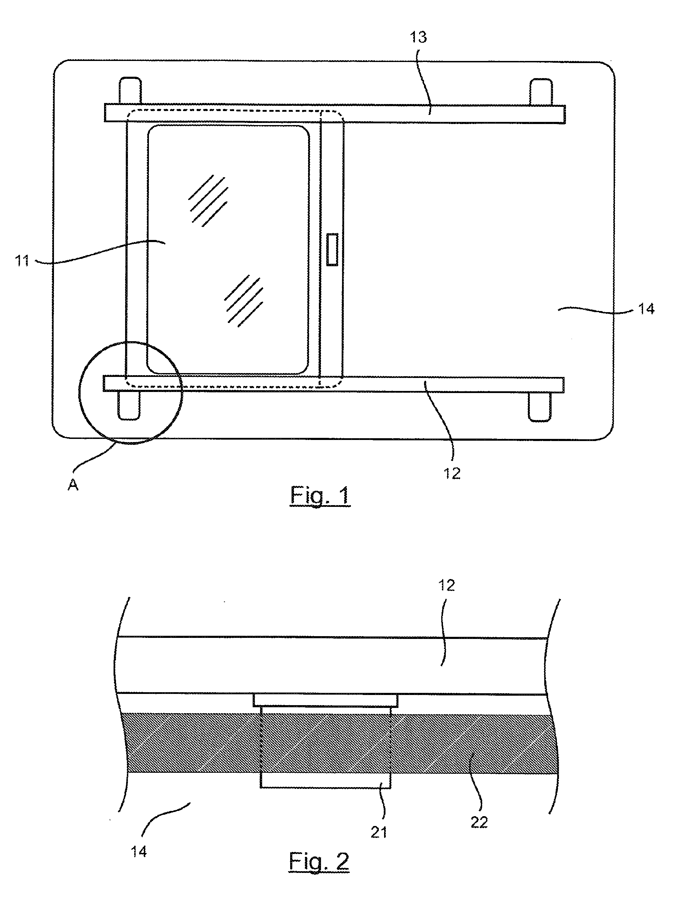

Un exemple d'une telle « baie flush » est illustré schématiquement sur la figure 1.

Pour assurer un coulissement de la partie mobile, constituée généralement par un panneau 11 essentiellement transparent ou translucide, les éléments fonctionnels comprennent un premier et un second rails de guidage 12, 13 montés fixes sur l'ensemble, ou partie, fixe 14 de la baie, de part et d'autre de l'ouverture fermée par le panneau mobile. Celui-ci est monté sur les rails 12 et 13, pour coulisser selon une direction longitudinale, dans un plan de coulissement entre une ou plusieurs position(s) d'ouverture et une position intermédiaire de dégagement dans laquelle il est en regard de l'ouverture et dégagé de celle-ci.

Ces rails 12 et 13 sont généralement solidarisés à la partie fixe au voisinage de ses bords, de façon qu'ils puissent être dissimulés, par exemple par de la sérigraphie rapportée sur la partie fixe. Les bords de la partie fixe 14 sont cependant essentiellement libres (c'est-à-dire notamment suffisamment éloignés des rails), de façon que l'on puisse y déposer un cordon de colle, encore appelé joint de colle dans la suite de la description, puis rapporter la partie fixe (équipée des rails et de la partie mobile) sur la carrosserie du véhicule, depuis l'extérieur de celui-ci, pour la coller sur des renfoncements prévus à cet effet et définissant les bords de la baie.

En outre, les rails peuvent être parallèles ou sensiblement non parallèles, et présenter le cas échéant un profil non rectiligne en fonction de la géométrie plus ou moins complexe de la baie.

Chacun des rails 12, 13 doit par ailleurs être solidarisé à la carrosserie. En effet, il est important, pour des raisons de sécurité et en conséquence d'homologation au regard des aspects réglementaires et/ou législatifs relatifs à la sécurité des véhicules, qu'en cas de bris de la partie fixe, le panneau mobile reste maintenu solidaire de la carrosserie (bien qu'il ne soit plus solidaire de la partie fixe vitrée, détruite), et ne tombe pas sur les passagers du véhicule.

Pour répondre à ce problème, on connaît une technique décrite dans le document EP-0 778 168 précité qui propose de prolonger les rails jusqu'à la carrosserie du véhicule contre laquelle ils sont ensuite fixés avec la partie fixe à l'aide d'un cordon de colle.

Actuellement, ces prolongements se présentent sous la forme de pattes rigides, encore appelées « tés », comme illustré par la figure 2, qui est une vue agrandie de la zone A de la figure 1.

Le rail 12 présente ainsi un prolongement 21, qui est recouvert pas le joint de colle 22 déposé sur la partie fixe 14.

Cette technique s'avère très efficace dans de nombreuses situations, notamment lorsque les baies présentent une grande surface.

Il apparaît cependant que cette technique peut présenter des problèmes de distribution de la matière lors du moulage de rails en plastique, et de coût du fait de la complexité des moules.

On constate en effet une déformation non maîtrisée à l'injection, pouvant augmenter de façon exponentielle avec la longueur de la patte. De plus, le remplissage est d'autant plus difficile que la patte est longue.

On a pensé à fabriquer les pattes indépendamment des rails et à les assembler aux rails par la suite, par exemple par clippage. Cette variante de la technique précédente est par exemple décrite dans le document EP-A-1 516 990. Elle présente cependant l'inconvénient d'ajouter une étape supplémentaire d'assemblage qui, au moins dans certains cas, peut être complexe. Une autre variante, décrite dans le document US 2005/252090, met en oeuvre des pattes assemblées par collage.

Un autre inconvénient de ces techniques connues est que les pattes peuvent présenter un obstacle pour l'application du cordon de colle assurant la fixation de la partie fixe à la carrosserie. Lorsque la patte n'est pas parfaitement plaquée à la partie fixe, l'assemblage interne est peu aisé, et le robot de collage peut heurter la patte, et donc dévier de sa trajectoire ou se bloquer.

Encore un autre inconvénient de ces techniques concerne les situations où le véhicule tend à se déformer en torsion. Une rupture de la continuité du cordon de collage peut dans ces situations se produire sous les pattes, où il est plus mince, et les pattes n'assurent alors plus leur fonction de retenue des rails en cas de bris de la partie fixe, ce qui n'est pas acceptable.

Par ailleurs, ces solutions ont été développées essentiellement pour des baies ménagées sur un côté du véhicule, et s'étendant sensiblement verticalement. Cependant, on souhaite également mettre en oeuvre de telles baies flush sur le pavillon du véhicule, de façon à fournir un pavillon vitré muni d'une ouverture, également vitrée (parfois appelé « toit ouvrant flush »).

Du fait de la grande surface d'un pavillon vitré, et donc de son poids, la plupart des problèmes identifiés ci-dessus sont amplifiés.

### 3. Objectifs de l'invention

L'invention a notamment pour objectif de pallier ces inconvénients de l'état de l'art.

Plus précisément, un objectif de l'invention est de fournir une technique d'obturation d'une baie de véhicule automobile mettant en oeuvre un panneau mobile vitré coulissant guidé dans des rails le long d'une partie fixe comportant une portion vitrée, qui garantisse la sécurité des occupants du véhicule en cas de bris de la partie fixe.

Plus précisément, un objectif particulier de l'invention est de fournir une telle technique qui permette de retenir le panneau mobile et les rails en place dans la situation évoquée précédemment.

Un autre objectif de l'invention est de proposer une telle technique d'obturation d'une baie qui permette de simplifier la fabrication et le montage des rails et donc de réduire fortement les coûts correspondants.

Encore un objectif de l'invention est de fournir une telle technique d'obturation d'une baie, qui conserve l'ensemble des avantages des « baies flush » déjà développées par le titulaire de la présente demande, et notamment :
- aspect esthétique affleurant ;
- aspects aérodynamiques ;
- ...

### 4. Exposé de l'invention

Ces objectifs, ainsi que d'autres qui apparaîtront par la suite, sont atteints à l'aide d'un dispositif d'obturation d'une baie ménagée dans un véhicule comprenant une partie fixe portant des rails sur sa face tournée vers l'intérieur dudit véhicule, et au moins une partie vitrée mobile guidée dans lesdits rails pour coulisser par rapport à ladite partie fixe.

Selon l'invention, un tel dispositif comprend au moins un élément de retenue d'au moins un desdits rails, présentant au moins un tronçon souple, dont une première extrémité est solidarisée audit rail et une deuxième extrémité est prise dans un joint de colle assurant la solidarisation de ladite partie fixe à ladite carrosserie.

Ainsi, en mettant en oeuvre un élément de retenue comprenant un tronçon souple, ou flexible, et pouvant être solidarisé après montage des rails, on simplifie, dans au moins certains cas, la fabrication et le montage de ces derniers. Selon les cas, seul un tronçon ou au contraire tout ou au moins la plus grande partie de celui-ci peut être souple.

On simplifie également l'assemblage par rapport aux dispositifs de l'art antérieur mettant en oeuvre des pattes fabriquées indépendamment des rails, en prévoyant un tronçon souple dont les extrémités sont prévues pour être solidarisées à la carrosserie (ou à un élément de structure du véhicule), d'une part, et à un rail, d'autre part.

Par ailleurs, le tronçon souple de l'élément de retenue représente un obstacle moindre pour l'assemblage, notamment pour un robot de collage.

Selon l'invention, ledit tronçon souple est un fil en nylon

Le tronçon souple présente ainsi une résistance suffisante pour supporter le poids des rails et/ou de la partie mobile.

Selon un aspect particulier de l'invention, au moins un desdits éléments de retenue présente une forme en 1 dont les extrémités sont respectivement solidaires dudit joint de colle et dudit rail.

La forme de 1 permet d'obtenir des surfaces suffisantes aux extrémités destinées à être solidarisées au rail et à la carrosserie (ou plus généralement à un élément de la structure du véhicule), et une surface faible, réduite à un fil, ailleurs.

Le nylon (qui peut bien sûr être remplacé par un matériau présentant les mêmes caractéristiques) présente une résistance suffisante pour supporter le poids des rails et/ou de la partie mobile.

Selon un mode de réalisation particulier de l'invention, ledit élément de retenue comprend une lamelle métallique.

Une telle lamelle métallique est résistante, et peut aisément être mise en forme, par exemple par emboutissage, et est facile à poser.

Préférentiellement, au moins un desdits éléments de retenue comprend des premiers moyens d'aimantation, et ladite partie fixe comprend des seconds moyens d'aimantation complémentaire (présents par exemple dans la sérigraphie), pour maintenir temporairement ledit élément de retenue sur ladite face tournée vers l'intérieur dudit véhicule.

Ainsi, on simplifie le montage.

D'autres moyens de maintien temporaire, par adhésif, collage, électrostatisme, etc. peuvent être utilisés.

De façon avantageuse, un tel dispositif d'obturation d'une baie comprend, pour chacun desdits rails, au moins deux desdits éléments de retenue dudit rail.

Chacun des rails peut notamment être ainsi retenu par ses deux extrémités, ou à proximité de ces extrémités. D'autres emplacements, et un nombre plus élevé d'éléments de retenue, peuvent être prévus en fonction des besoins.

Selon un aspect avantageux de l'invention, au moins un desdits éléments de retenue forme ou comprend des moyens aptes à guider l'eau recueillie dans le rail vers l'extérieur du véhicule.

Ainsi, il n'est pas nécessaire de prévoir des drains supplémentaires pour évacuer l'eau provenant de la formation de buée sur la face intérieure de la partie fixe et de la partie mobile, ce qui simplifie la fabrication et le montage d'un tel dispositif.

Selon un autre mode de réalisation particulier, au moins un élément de retenue est formée par au moins une portion de film souple s'étendant sur une partie de la face orientée vers l'intérieur du véhicule.

Ce film permet d'assurer, de façon simple efficace, la retenue des rails, en cas de bris du panneau fixe.

Selon les cas, la ou lesdites portions de film présentent des trous, destinés à faciliter le collage desdits rails sur ledit panneau fixe. Elles peuvent être renforcées, en cas de besoin, par une armature, par exemple maillée.

Plusieurs éléments de retenue peuvent être formés par autant de portions de films. Selon une autre approche, le dispositif d'obturation comprend une portion de film unique formant l'ensemble desdits éléments de retenue.

On peut également prévoir que des sous-ensembles de portions de film (par exemple associées à un même rail) soient reliées entre elles.

Plus généralement, au moins deux éléments de retenue peuvent être reliés entre eux. Par exemple, dans le cas d'éléments de retenue en nylon, ceux-ci peuvent être liés les uns aux autres, par exemple pour former un maillage, ou une sorte de toile d'araignée.

Selon un autre aspect de l'invention, le dispositif d'obturation comprend également, dans certains modes de réalisation, des moyens de liaison dudit panneau mobile et d'au moins un desdits rails, lorsque le ou lesdits rails sont désolidarisés du panneau fixe et retenus par lesdits éléments de retenue souples.

De cette façon, le panneau mobile reste suspendu aux rails, et ne risque pas de tomber sur un passager, même si les rails se déplacent du fait du bris du panneau fixe.

Il est à noter, par ailleurs, que l'approche décrite ci-dessus ne se limite pas aux rails, mais peut être généralisé à la retenue d'au moins un autre élément mécanique solidarisé au panneau fixe, tel qu'une traverse latérale, un longeron, un déflecteur,...

Bien sûr les différents aspects considérés ci-dessus peuvent être combinés.

L'invention concerne également un véhicule automobile comprenant au moins un dispositif d'obturation tel que décrit ci-dessus.

L'invention concerne encore un procédé de fabrication et/ou de montage d'un dispositif d'obturation tel que décrit ci-dessus. Ce procédé comprend les étapes suivantes :
- obtention d'un dispositif d'obturation comprenant une partie fixe et d'une partie vitrée mobile, guidée dans des rails pour coulisser par rapport à ladite partie fixe ;
- solidarisation de ladite première extrémité du ou desdits éléments de retenue sur ledit rail ;
- application d'un joint de colle sur ladite face de ladite partie fixe tournée vers l'intérieur, recouvrant ladite deuxième extrémité du ou desdits éléments de retenue.

Le dispositif ainsi fabriqué peut ensuite être facilement monté sur un véhicule automobile, par une étape unique de :
- montage dudit dispositif encollé sur ladite carrosserie aux bords de ladite baie, ladite face de ladite partie fixe tournée vers l'intérieur étant en retrait de ladite carrosserie,
   de façon à assurer une continuité visuelle entre ladite carrosserie et ledit dispositif d'obturation.

Avantageusement, le procédé comprend une étape de :
- solidarisation temporaire dudit élément de retenue à ladite partie fixe et/ou audit rail, de façon que ledit élément de retenue s'étende sensiblement perpendiculairement audit rail.

### 5. Liste des figures

D'autres caractéristiques et avantages de l'invention apparaîtront plus clairement à la lecture de la description suivante de modes de réalisation préférentiels de l'invention, donnés à titre de simples exemples illustratifs et non limitatifs, et des dessins annexés parmi lesquels :
- la figures 1, déjà commentée en préambule, présente un exemple de baie flush coulissante ;
- la figure 2, également commentée en préambule, présente une patte de fixation de la baie flush de la figure 1, selon l'art antérieur ;
- la figure 3 illustre de façon schématique, dans une vue en coupe, un premier mode de réalisation de l'invention, mettant en oeuvre un élément de retenue en nylon ;
- la figure 4 illustre un deuxième mode de réalisation de l'invention, également en coupe, mettant en oeuvre une lamelle métallique ;
- la figure 5 illustre, selon une vue en coupe, un quatrième mode de réalisation de l'invention, mettant en oeuvre un élément de retenue assurant également une fonction de drain ;
- les figures 6A à 6C illustrent un cinquième mode de réalisation, mis en oeuvre, dans cet exemple, sur un pavillon vitré, et mettant en oeuvre un film ;
- la figure 7 présente une variante du mode de réalisation des figures 6 A à 6C, mettant en oeuvre plusieurs portions de film ;
- la figure 8 illustre un septième mode de réalisation de l'invention, mettant en oeuvre plusieurs éléments de retenue reliés les uns aux autres ;
- la figure 9 présente un premier mode de retenue du panneau fixe par rapport à l'un des rails ;
- la figure 10 illustre un second mode de retenue du panneau fixe par rapport à l'un des rails ;
- la figure 11 est un diagramme synoptique illustrant les étapes d'un procédé de fabrication d'une baie ou d'un pavillon flush selon l'invention.

### 6. Description détaillée d'un mode de réalisation de l'invention

### 6.1 Rappels sur la « baie flush »

Comme déjà mentionné, le dispositif est avantageusement une « baie flush » du type déjà décrit rapidement en préambule, et illustré par la figure 1, ou un « toit ouvrant flush ».

Il comprend donc une partie fixe qui sera rapportée sur la carrosserie du véhicule, par exemple par collage. Une partie mobile, montée sur la partie fixe, permet d'obturer ou de libérer une ouverture définie dans cette partie fixe. Des rails fixés (ou moulés) sur la face intérieure de la partie fixe assurent le guidage de la partie mobile, celle-ci coulissant le long de la partie fixe.

Le mouvement de la partie mobile par rapport à la partie fixe peut être décomposé en deux déplacements indépendants :
- un déplacement perpendiculaire par rapport au plan formé par la partie fixe, permettant le passage d'une position d'obturation de l'ouverture, dans laquelle la partie mobile se trouve dans le même plan que la partie fixe, et est verrouillée, à une position de libération, dans laquelle la partie mobile est décalée par rapport à la partie fixe dans un plan de coulissement, de façon à permettre le coulissement ;
- un déplacement dans le plan de coulissement, parallèle au plan formé par la partie fixe.

Bien sûr, d'autres mouvements sont possibles. Par exemple, la partie mobile peut suivre une courbe selon laquelle les deux mouvements (verrouillage/déverrouillage et coulissement) sont liés.

Par ailleurs, le dispositif de l'invention s'applique notamment aux parois latérales d'un véhicule. Cependant, il peut également être mis en oeuvre sur le pavillon d'un véhicule, et plus généralement en tout emplacement où cela serait souhaitable.

Les portions vitrées de la partie fixe et de la partie mobile peuvent être en verre ou en un matériau transparent ou translucide adapté. Certaines portions de la partie fixe peuvent également être réalisées dans le même matériau que la carrosserie. La partie fixe et la partie mobile peuvent être planes, bombées ou incurvées.

### 6.2 Principe de l'invention

L'invention propose donc une technique permettant de retenir au moins un des rails et le panneau mobile en liaison avec la carrosserie, en cas de bris de tout ou partie de la structure fixe, en solidarisant les rails de guidage à la carrosserie ou à des éléments solidaires de la carrosserie du véhicule, par l'intermédiaire d'éléments de retenue souples, ou flexibles, solidarisés d'une part à l'un des rails, et d'autre part à la structure du véhicule, par l'intermédiaire du cordon de colle.

En cas de bris, les rails restent suspendus à la carrosserie, via les éléments de retenue souples. La souplesse, ou flexibilité, de ces éléments de retenue permet d'augmenter la sécurité, en permettant un déplacement des rails (dont l'amplitude, de quelques centimètres, est définie par les dimensions des éléments de retenue), une absorption et/ou une dissipation partielle de l'énergie d'un choc, une tolérance à la déformation éventuelle du châssis en cas de choc. Cette approche va cependant à l'encontre des a priori de l'homme du métier, qui a toujours proposé des éléments de retenue rigides, c'est-à-dire conçus pour que les rails restent dans leur position d'origine, pour retenir le panneau fixe.

Comme on le verra par la suite, des éléments de retenue sont également avantageusement prévus pour d'autres éléments que les rails, et par exemple des traverses latérales, un boîtier de store, un support de motorisation,... qui peuvent être solidarisés au panneau fixe, et donc tomber sur les passagers en cas de bris de ce dernier.

Cette approche est par ailleurs beaucoup plus simple que la mise en oeuvre d'éléments rigides, qu'ils soient formés dans la masse du rail ou rapportés sur celui-ci. On simplifie en effet la fabrication et l'assemblage. Par ailleurs, ces éléments souples sont moins soumis aux problèmes de torsion ou aux anomalies de montage, et ne perturbe pas le fonctionnement des robots de collage.

### 6.3. Description d'un premier mode de réalisation de l'invention

Le mode de réalisation, décrit par la suite, concerne un dispositif destiné à équiper une baie latérale de véhicule automobile, du type de celle illustrée par la figure 1. La même approche peut bien sûr être appliquée à d'autres types de baie, et notamment aux baies équipant des pavillons.

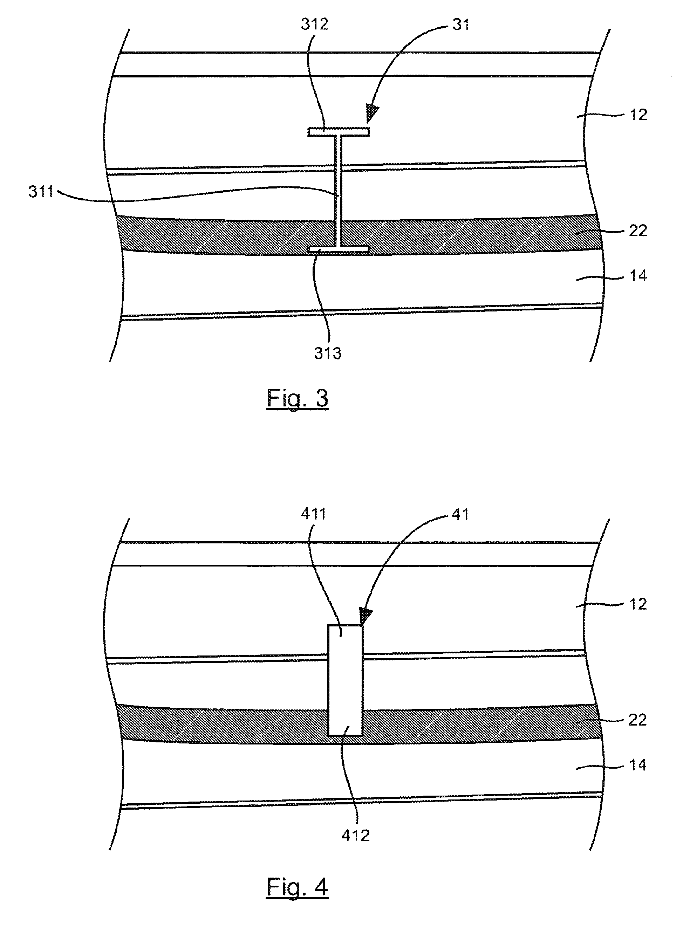

Selon ce premier mode de réalisation, illustré par la figure 3, l'élément de retenue est un fil nylon 31. D'autres matériaux présentant des caractéristiques similaires en terme de solidité et de souplesse peuvent bien sûr être utilisés.

Le fil nylon 31 présente une forme en «I», avec une partie principale de liaison 311, destinée à s'étendre sensiblement verticalement, et deux parties d'extrémités 312, 313, s'étendant perpendiculairement à la partie principale 311.

La partie d'extrémité 312 est destinée à être solidarisée au rail 12, par collage ou autre moyen adéquat (soudage, introduction dans un trou prévu à cet effet, clipsage,...). La partie d'extrémité 313 est destinée à être prise dans le cordon de colle 22.

Avantageusement, l'élément de retenue, ou au moins la partie principale 311, est enduit d'un adhésif permettant de le maintenir temporairement plaqué contre la partie fixe 14, tant que le cordon de colle 22 n'a pas été déposé.

Dans une variante de ce mode de réalisation, il peut être envisagé d'enduire l'élément de retenue, ou au moins la partie principale 311, d'un mastic structurel.

### 6.4 Description d'un deuxième mode de réalisation de l'invention

Selon un deuxième mode de réalisation, illustré par la figure 4, l'élément de retenue est une lamelle flexible 41, par exemple en plastique ou en métal, dont une première extrémité 411 est collée au rail 12, et dont la deuxième extrémité 412 est destinée à être prise dans le cordon de colle 22.

On peut prévoir que cette lamelle flexible 41 soit maintenue temporairement par adhésion sur la partie fixe 14, ou par aimantation. Dans ce dernier cas, la sérigraphie déposée sur la partie fixe peut être aimantée, pour retenir la lamelle flexible.

### 6.5 Description d'un troisième mode de réalisation de l'invention

Selon un troisième mode de réalisation, l'élément de retenue peut être un tronçon de bande adhésive armée, s'étendant depuis le rail puis sur la partie fixe, jusque dans la zone où sera placé le cordon de colle.

### 6.6 Description d'un quatrième mode de réalisation de l'invention

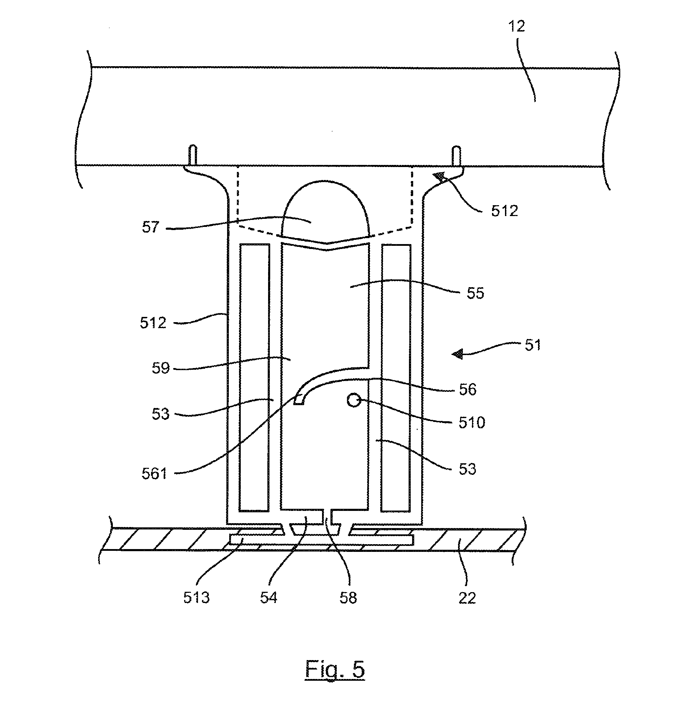

Un quatrième mode de réalisation de l'invention est illustré en référence à la figure 5, dans une vue en coupe.

Dans ce mode de réalisation, l'élément de retenue 51, en matière plastique souple, présente une portion principale formant drain 511 entre deux portions d'extrémité 512 et 513. La première portion d'extrémité 512 est collée au rail 12 et la deuxième portion d'extrémité est prise dans le joint de colle 22.

La portion principale formant drain 511, qui réalise une liaison entre le rail 12 et le cordon de colle 22, permet par ailleurs avantageusement d'évacuer l'eau provenant de la formation de buée sur la face intérieure du dispositif selon l'invention et recueillie dans le rail 12, vers l'extérieur du véhicule, comme expliqué par la suite. De forme creuse, sensiblement parallélépipédique, elle définit un passage d'eau 55 entre un orifice d'entrée 57 et un orifice de sortie 58, qui est délimité par les parois latérales 53 et 54, une paroi avant et une paroi arrière (non apparentes dans la vue en coupe de la figure 5).

L'eau recueillie dans le rail 12 peut ainsi être admise dans le passage 55 au travers de l'orifice 57, qui communique avec une ouverture formée dans le rail 12, et rejetée à l'extérieur du véhicule, via un perçage au travers de la partie fixe, ou dans une variante de ce mode de réalisation via un perçage au travers de la carrosserie, qui communique avec l'orifice 58.

Sensiblement au tiers de sa hauteur, la section de ce passage 55 est partiellement obturée par une languette brise-goutte et/ou brise-jet 56, prévue pour améliorer l'évacuation de l'eau pénétrant dans ce passage 55, en accélérant l'écoulement de l'eau qui y circule. La languette 56 présente à cet effet une portion tombante 561, sensiblement en arc de cercle, disposée à l'aplomb de l'orifice d'entrée 56, permettant de guider l'eau, à la façon d'une chicane, vers le rétrécissement 59 dans laquelle elle accélère.

Par ailleurs, un orifice d'arrivée d'air 510 est prévu sous la languette, pour admettre de l'air sous la languette 56, et maintenir une pression égale à la pression atmosphérique au voisinage de la sortie du passage 55.

Sous la portion d'extrémité 512, un joint de mastic d'étanchéité, par exemple d'un mastic de vitrier, assure l'étanchéité de la jonction entre le rail 12 et la portion formant drain 511.

Il est à noter que, de même que dans les modes de réalisation décrits précédemment, l'élément 51 ne traverse pas le joint 22 (c'est-à-dire qu'il ne dépasse pas au-delà du joint, du côté opposé au rail 12, ou en d'autres termes vers le bas), son extrémité 513 étant prise dans le joint 22. Il est cependant possible, en cas de besoin, de prévoir que cela soit le cas.

Il convient de noter que cette approche n'est pas limitée à la mise en oeuvre d'une portion de l'élément de retenue formant drain en plastique souple, celle-ci pouvant être réalisée en tout matériau approprié, sans sortir du cadre de l'invention.

### 6.7 Description d'un cinquième mode de réalisation de l'invention

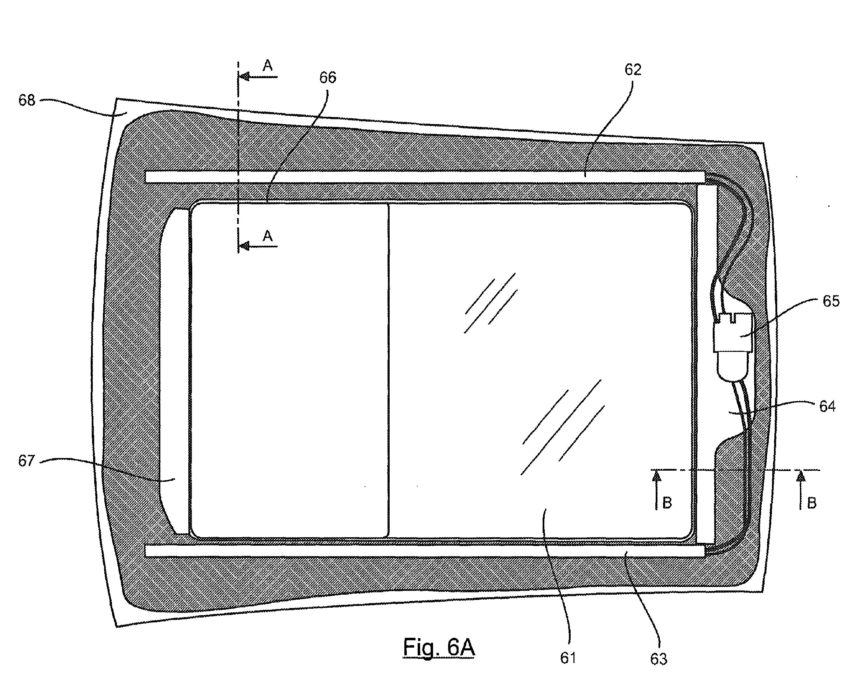

Les figures 6A à 6C illustrent un cinquième mode de réalisation de l'invention, appliqué à un toit ouvrant flush. De même que les modes de réalisation décrits précédemment peuvent également s'appliquer aux toits ouvrants, ce mode de réalisation et le suivant peuvent également être mis en oeuvre sur une baie latérale.

Comme déjà expliqué, sur les systèmes de baie, de toit ouvrant en verre, et également de toit en verre, la partie fixe en verre constitue une pièce porteuse de certains éléments mécaniques, tels que les rails 62, 63, une traverse arrière 64, pouvant porter des moyens de motorisation 65 contrôlant notamment le déplacement d'un panneau mobile (non représenté), le long des rails de guidage 62 et 63, et le cas échéant un cadre 66, par exemple en plastique, un déflecteur 67,...

Pour des questions de sécurité et de réglementation, en particulier sur les toits en verre, il est essentiel que ces différents éléments mécaniques ne puissent pas se désolidariser de la structure du véhicule, et tomber dans l'habitacle sur les passagers, en cas de bris du verre trempé du panneau fixe 61.

Selon ce cinquième mode de réalisation, on prévoit de placer un film souple 68 sur tout ou partie de la zone sérigraphiée 611 du panneau fixe 61. Ce film plastique 68 est solidarisé sur la face tournée vers l'intérieur du véhicule du verre fixe 61, par exemple par collage « de moyens adhésifs », par électrostatisme, ou toute solution adéquate.

Ce film 68 peut présenter des trous, afin d'assurer un bon collage entre les éléments mécaniques, par exemple les rails, et le verre trempé.

Le film 68 se trouve donc pris en sandwich entre chaque rail 62, 63 et le verre 61, et également, après montage sur le véhicule entre le verre et la caisse en blanc, ou un élément de structure du véhicule (non représenté). La même approche s'applique à la traverse 64, au déflecteur 67 et au cadre 66 définissant l'ouverture. Ainsi, tous ces éléments mécaniques sont reliés, à l'aide d'une liaison souple assurée par le film, à la caisse en blanc en cas de bris du panneau fixe 61.

Le film 68 peut également permettre le maintien de moyens d'évacuation de liquides recueillis par les rails, par exemple sous la forme de tubes ou de plaques conformés pour assurer cette fonction.

Ce film 68 étant uniquement présent sur la partie sérigraphiée 611, il ne dégrade pas les caractéristiques techniques du verre dans la zone de transparence (transmission lumineuse).

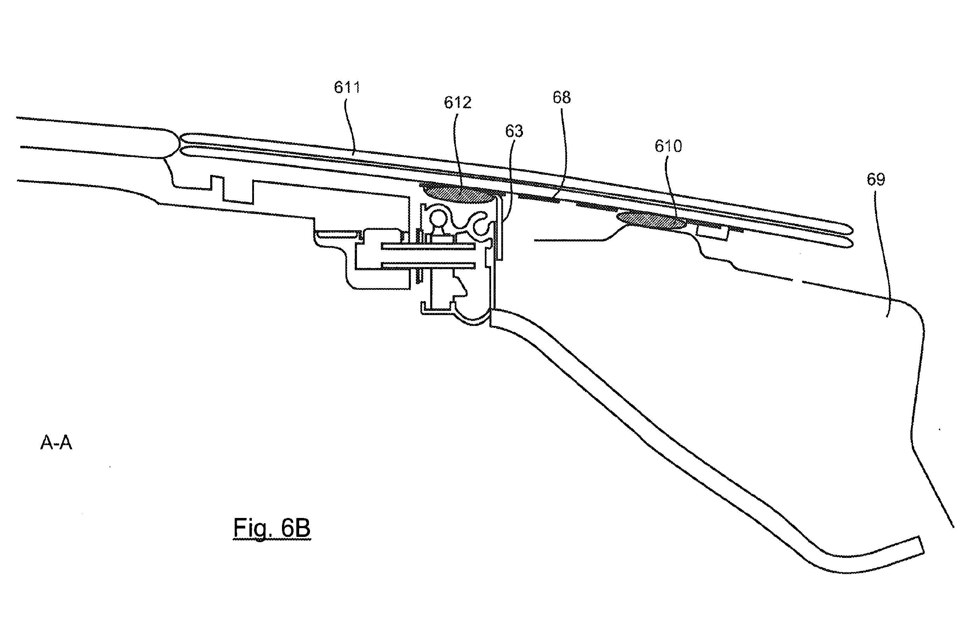

Comme on le voit sur la vue en coupe de la figure 6B, correspondant à la coupe A-A de la figure 6A, le film 68 s'étend sur la portion de vitre 6 sérigraphiée 611, et se trouve collé d'une part à la caisse en blanc 69, via le cordon de colle 610, et d'autre part au rail 63, par l'intermédiaire d'un cordon de colle 612. En cas de besoin, d'autres moyens de solidarisation aux rails ou à d'autres éléments mécaniques (soudage par exemple) sont utilisables.

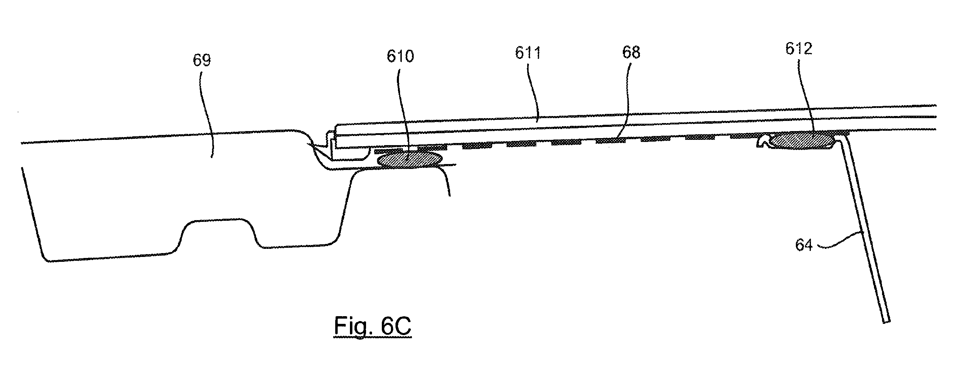

De la même façon, comme on le voit sur la figure 6C qui est une vue en coupe de la partie arrière B-B (figure 6A), le film plastique 68 peut être collé à la traverse 64, par le cordon de colle 612.

### 6.8 Description d'un sixième mode de réalisation de l'invention

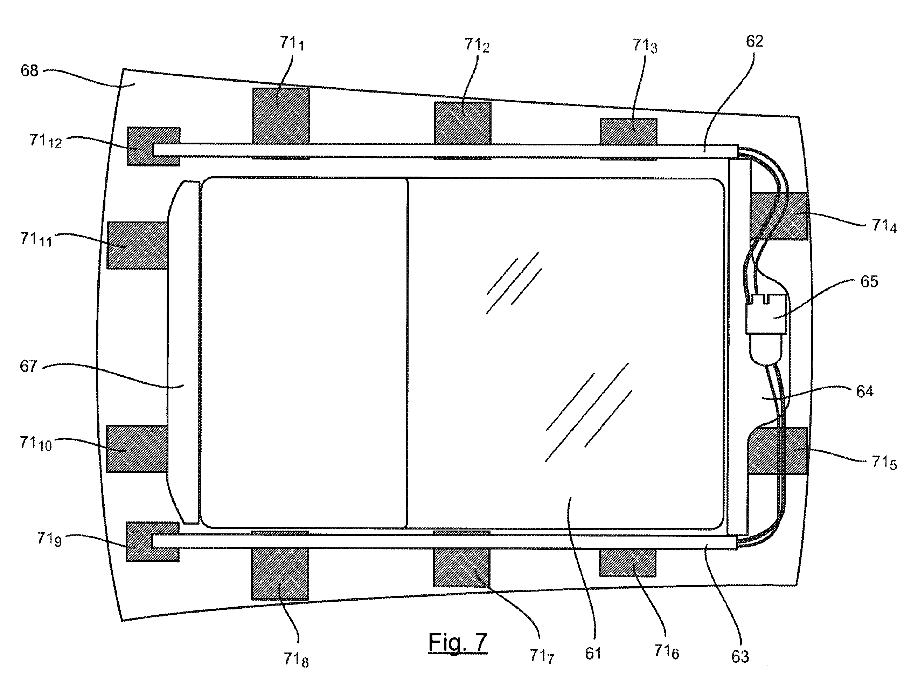

Selon une variante de la technique décrite ci-dessus, illustrée par la figure 7, on utilise une pluralité de films plastiques 71₁ à 71₁₂, de surface correspondant, par exemple, à quelques dizaines ou centaines de centimètres carrés.

La mise en oeuvre de ces portions de films est similaire à celle décrite pour un film complet au paragraphe précédent. Les nombres et dimensions des portions de films sont représentés à titre indicatif, de même que les formes retenues. Pour illustration, on a représenté des portions de films 71₉ et 71₁₂ à l'extrémité des rails 62 et 63, pour montrer qu'il est également possible de retenir ces derniers par leurs extrémités. De la même façon, les traverses et/ou les déflecteurs pourraient être retenus par leurs extrémités de façon que toutes les portions de films s'étendent dans la même direction.

### 6.9 Description d'un septième mode de réalisation de l'invention

Selon encore une variante, les portions de film 71₁ à 71₁₂ de la figure 7 peuvent être reliées entre elles, soit par groupes, par exemple à l'aide d'une portion de film s'étendant sensiblement sous le rail 62 pour solidariser les portions 71₁ à 71₁₃, soit sous la forme d'un cadre souple global, solidarisant toutes les portions 71₁ à 71₁₂. La liaison peut être formée dans l'élément plastique lui-même, le tout étant alors découpé selon sa forme globale, ou par un fil, par exemple en nylon. Cette approche peut permettre de simplifier le stockage et le montage sur le véhicule.

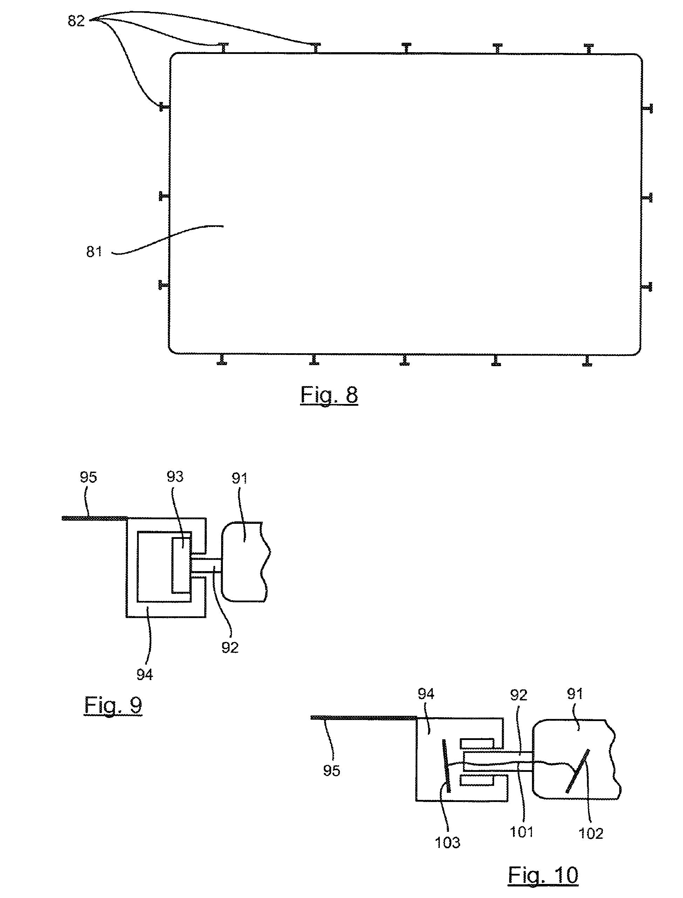

Cette même approche peut être mise en oeuvre, d'ailleurs, pour les autres modes de réalisation de l'invention, décrits ci-dessus. Ainsi, comme illustré sur la figure 8, on peut prévoir un cadre en fil nylon ou équivalent à partir duquel s'étendent des prolongements 82 destinés à être solidarisés à la carrosserie.

Selon les cas, le cadre 81 peut être réalisé côté intérieur (c'est-à-dire solidarisable aux rails), côté extérieur, c'est-à-dire côté solidarisable à la carrosserie voire des deux côtés.

On obtient ainsi un élément plus ou moins maillé, permettant d'assurer une retenue efficace des différents éléments mécaniques.

Selon encore une autre approche, les éléments de retenue peuvent être formés par un filet.

### 6.10 Solidarisation entre les rails et le panneau mobile

Comme indiqué précédemment, l'utilisation d'éléments de retenue souples présente de nombreux avantages. Cependant, cette souplesse entraîne potentiellement un déplacement du rail, lorsque le panneau fixe est brisé. Notamment, dans le cas des pavillons vitrés, le rail est alors entraîné vers le bas, sous l'effet de la gravité, pour rester suspendu aux éléments de retenue. Il existe alors un risque que le panneau mobile, et plus précisément les pions de guidage dont il est équipé et qui peuvent se déplacer dans le rail, se désolidarise du rail. Dans ce cas, le panneau mobile peut tomber sur les passagers.

Dans les cas où ce risque existe, il est proposé de prévoir des moyens de retenue entre les rails et le panneau mobile.

Selon un premier mode de réalisation, illustré par la figure 9, le cadre 91 du panneau mobile est équipé de pions 92 portant une extension 93, circulant à l'intérieur du cadre 94, et présentant des dimensions supérieures à l'ouverture 95 du rail, traversé par le pion 92. Ainsi, en cas de bris du panneau fixe, le rail 94 sera suspendu à la carrosserie par l'élément de retenue souple 95, et le panneau mobile restera solidarisé à ce rail 94, l'élément 93 ne pouvant pas s'échapper du rail.

Selon les cas, l'élément 93 peut être une simple pièce rapportée, ou formée dans la masse du pion 92, ou encore une roulette ou un patin, aidant au guidage. Si l'on souhaite limiter les frottements, cet élément 93 peut être dimensionné de façon à ne pas entrer en contact avec l'intérieur du rail 94, en fonctionnement normal.

Selon une autre approche, illustrée par la figure 10, le pion 92 peut être un élément creux (ce qui permet, le cas échéant, l'évacuation de liquide). Dans ce cas, un élément de retenue souple 101, par exemple, traverse le pion 92. Sa première extrémité 102 est collée au cadre 91, ou simplement introduite dans celui-ci, par une ouverture de petit diamètre. L'autre extrémité 103 se déploie dans le rail 94. Ces deux extrémités présentent une ou plusieurs branches ou surfaces suffisantes pour retenir le cadre 91 suspendu au rail 94, lorsque le panneau fixe est cassé et que le rail est lui-même suspendu à l'élément de retenue souple 95.

### 6.11 Autres aspects et avantages

Dans les différents cas, l'invention présente notamment au moins certains des avantages suivants :
- coût réduit et simplicité de fabrication des éléments de retenue souples ;
- simplification de la fabrication des rails, notamment lorsqu'ils sont moulés ;
- gain en matière plastique ;
- gain sur la déformation des rails ;
- plaquage efficace des éléments de retenue avant et pendant le dépôt du cordon de colle ;
- adaptation aisée aux variations de distance entre le rail et le cordon de colle.

Elle permet par ailleurs de sécuriser non seulement le maintien des rails, et du panneau mobile, mais également de tous les éléments mécaniques susceptibles d'être solidarisés au panneau fixe en verre (notamment en verre trempé), tels que :
- une traverse latérale, arrière, centrale ou à l'avant du panneau fixe ;
- un longeron ;
- une traverse longitudinale ;
- un rétroviseur ;
- des moyens d'éclairage ;
- des moyens d'aération ou de climatisation ;
- un store d'occultation :
- une palette pare-soleil ;
- des moyens d'évacuation de l'eau ;
- un cadre définissant l'ouverture ;
- un déflecteur ;
- ...

### 6.12 Exemple de procédé de fabrication et de montage

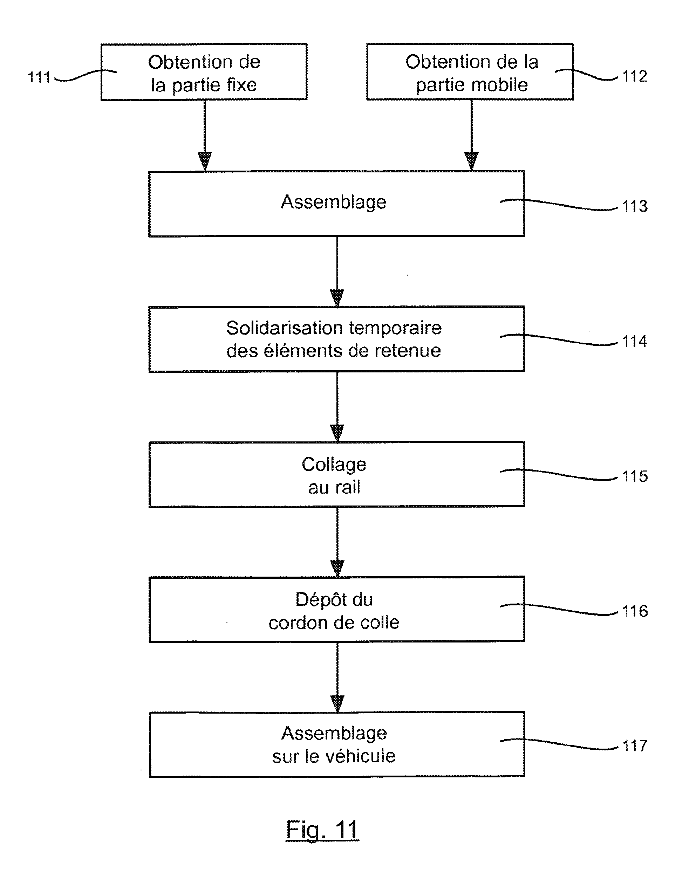

Une baie selon l'invention peut notamment être réalisée selon le procédé illustré par la figure 11.

On fabrique tout d'abord une baie selon la technique connue, en obtenant d'une part la partie fixe, par exemple sous la forme d'une vitre percée d'une ouverture, lors d'une étape 111, et d'autre part la partie mobile, par exemple sous la forme d'un panneau équipé d'un cadre et de moyens de montage et de guidage dans les rails, lors d'une étape 112. Ces deux parties sont assemblées (étape 113), à l'aide des rails, pour former une « baie flush » prête à être montée sur un véhicule.

Selon l'invention, on prévoit également des éléments de retenue souples, qui peuvent être solidarisés temporairement, lors d'une étape 114, soit juste après l'assemblage 113 (lors de la fabrication de la baie), soit au moment du montage sur le véhicule, par le constructeur. Cette solidarisation temporaire 114 peut se faire par exemple à l'aide de moyens adhésifs (colle, ruban adhésif,...) ou par aimantation.

Ensuite, une des extrémités de l'élément de retenue est solidarisée, par collage par exemple, au rail qu'il doit retenir en cas de bris de la partie fixe, lors d'une étape 115.

L'autre extrémité de l'élément de retenue est recouverte par le cordon de colle (étape 116) déposé sur les bords du panneau fixe, et maintenu dans ce cordon.

Enfin, classiquement, la baie flush est assemblée au véhicule, lors d'une étape 117, à l'aide du cordon de colle qui solidarise les bords de la partie fixe (et donc les extrémités des éléments de retenue pris dans le cordon de colle) à la carrosserie.

## Revendications

1. Dispositif d'obturation d'une baie ménagée dans un pavillon de véhicule automobile, comprenant une partie fixe (14) portant des rails (12, 13) sur sa face tournée vers l'intérieur dudit véhicule, et au moins une partie vitrée mobile (11) guidée dans lesdits rails (12, 13) pour coulisser par rapport à ladite partie fixe (14),
**caractérisé en ce qu'**il comprend au moins un élément de retenue (31, 41, 51) d'au moins un desdits rails (12, 13), présentant au moins un fil de nylon en forme de I, avec une partie principale de liaison (311) et deux parties d'extrémités (312, 313) s'étendant perpendiculairement à la partie principale (311), dont une première extrémité (312) est solidarisée audit rail (12, 13) et une deuxième extrémité (313, 513) est prise dans un joint de colle (22) assurant la solidarisation de ladite partie fixe à ladite carrosserie.

2. Dispositif d'obturation selon la revendication 1, **caractérisé en ce que** ledit élément de retenue comprend une lamelle métallique (41).

3. Dispositif d'obturation selon l'une quelconque des revendications 1 et 2, **caractérisé en ce qu'**au moins un desdits éléments de retenue (31, 41, 51) comprend des premiers moyens d'aimantation, et **en ce que** ladite partie fixe (14) comprend des seconds moyens d'aimantation complémentaire, pour maintenir temporairement ledit élément de retenue (31, 41, 51) sur ladite face tournée vers l'intérieur dudit véhicule.

4. Dispositif d'obturation selon l'une quelconque des revendications 1 à 3, **caractérisé en ce qu'**au moins un desdits éléments de retenue (31, 41, 51) comprend des moyens aptes à guider l'eau recueillie dans le rail (12, 13) vers l'extérieur dudit véhicule.

5. Dispositif d'obturation selon l'une quelconque des revendications 1 à 4, **caractérisé en ce qu'**il comprend, pour chacun desdits rails (12, 13), au moins deux desdits éléments de retenue (31,41,51) dudit rail.

6. Dispositif d'obturation selon la revendication 1, **caractérisé en ce qu'**au moins un élément de retenue est formée par au moins une portion de film souple (68) s'étendant sur une partie de la face orientée vers l'intérieur du véhicule.

7. Dispositif d'obturation selon la revendication 6, **caractérisé en ce que** la ou lesdites portions de film (68) présentent des trous, destinés à faciliter le collage desdits rails (62, 63) sur ledit panneau fixe (61).

8. Dispositif d'obturation selon l'une quelconque des revendications 1 à 7, **caractérisé en ce qu'**au moins deux éléments de retenue sont reliés entre eux.

9. Dispositif d'obturation selon l'une quelconque des revendications 1 à 8, **caractérisé en ce qu'**il comprend également des moyens de liaison dudit panneau mobile et d'au moins un desdits rails (94), lorsque le ou lesdits rails sont désolidarisés du panneau fixe et retenus par lesdits éléments de retenue souples (95).

10. Dispositif d'obturation selon l'une quelconque des revendications 1 à 9, **caractérisé en ce qu'**il comprend également au moins un élément de retenue d'au moins un autre élément mécanique solidarisé au panneau fixe, tel qu'une traverse latérale, un longeron ou un déflecteur.

11. Véhicule automobile comprenant une baie ménagée dans sa carrosserie, **caractérisé en ce qu'**il comprend un dispositif d'obturation de ladite baie de pavillon selon l'une quelconque des revendications 1 à 10, comprenant une partie fixe (14) portant des rails (12, 13) sur sa face tournée vers l'intérieur dudit véhicule, et au moins une partie vitrée mobile (11) guidée dans lesdits rails (12, 13) pour coulisser dans lesdits rails dans un plan sensiblement parallèle au plan défini par ladite partie fixe (14), et au moins un élément de retenue (31, 41, 51) d'au moins un desdits rails (12, 13), présentant au moins un fil de nylon en forme de 1 (311) dont une première extrémité (312, 512) est solidarisée audit rail (12, 13) et dont une deuxième extrémité (313, 513) est prise dans un joint de colle (22) assurant la solidarisation de ladite partie fixe (14) à ladite carrosserie.

12. Procédé de fabrication et/ou de montage d'un dispositif d'obturation d'une baie ménagée dans un pavillon de véhicule automobile selon l'une quelconque des revendications 1 à 10, **caractérisé en ce qu'**il comprend les étapes suivantes :
- obtention d'un dispositif d'obturation comprenant une partie fixe (61) et une partie vitrée mobile (62), guidée dans des rails pour coulisser par rapport à la partie fixe ;
- solidarisation (65) de ladite première extrémité du ou desdits fil de nylon sur ledit rail ;
- application d'un joint de colle (66) sur ladite face de ladite partie fixe tournée vers l'intérieur, recouvrant ladite deuxième extrémité du ou desdits fil de nylon.

## Claims

1. Closing device for a bay made in a motor vehicle roof, comprising a fixed part (14) carrying rails (12, 13) on its face which is turned towards the interior of the said vehicle, and at least one movable glazed part (11) which is guided in the said rails (12, 13) so as to slide in relation to the said fixed part (14), **characterised in that** said closing device comprises at least one element (31, 41, 51) for retaining at least one of the said rails (12, 13), having at least one I-shaped nylon thread with a main linking part (311) and two end parts (312, 313) extending perpendicularly to the main part (311), of which thread a first end (312) is attached to the said rail (12, 13) and a second end (313, 513) is held in a glue joint (22) which brings about the attachment of the said fixed part to the said bodywork.

2. Closing device according to claim 1, **characterised in that** the said retaining element comprises a metal lamella (41).

3. Closing device according to either of claims 1 or 2, **characterised in that** at least one of the said retaining elements (31, 41, 51) comprises first magnetisation means, and **in that** the said fixed part (14) comprises second means of complementary magnetisation so as to temporarily hold the said retaining element (31, 41, 51) in position on the said face which is turned towards the interior of the said vehicle.

4. Closing device according to any of claims 1 to 3, **characterised in that** at least one of the said retaining elements (31, 41, 51) comprises means which are capable of guiding the water collected in the rail (12, 13) to the outside of the said vehicle.

5. Closing device according to any of claims 1 to 4, **characterised in that** it comprises, for each of the said rails (12, 13), at least two of the said elements (31, 41, 51) for retaining the said rail.

6. Closing device according to claim 1, **characterised in that** at least one retaining element is formed by at least one portion of flexible film (68) extending over part of the face which is oriented towards the interior of the vehicle.

7. Closing device according to claim 6, **characterised in that** the said portion or portions of film (68) has/have holes which are intended to facilitate the gluing of the said rails (62, 63) onto the said fixed panel (61).

8. Closing device according to any of claims 1 to 7, **characterised in that** at least two retaining elements are connected to each other.

9. Closing device according to any of claims 1 to 8, **characterised in that** it also comprises means for linking the said movable panel and at least one of the said rails (94), when the said rail or rails is/are detached from the fixed panel and retained by the said flexible retaining elements (95).

10. Closing device according to any of claims 1 to 9, **characterised in that** it also comprises at least one element for retaining at least one other mechanical element attached to the fixed panel, such as a lateral cross-piece, a side-member or a deflector.

11. Motor vehicle comprising a bay made in its bodywork, **characterised in that** it comprises a closing device for the said roof bay according to any of claims 1 to 10, comprising a fixed part (14) carrying rails (12, 13) on its face which is turned towards the interior of the said vehicle, and at least one movable glazed part (11) which is guided in the said rails (12, 13) so as to slide within the said rails in a plane which is substantially parallel to the plane defined by the said fixed part (14), and at least one element (31, 41, 51) for retaining at least one of the said rails (12, 13), having at least one I-shaped nylon thread (311), of which a first end (312, 512) is attached to the said rail (12, 13) and of which a second end (313, 513) is held in a glue joint (22) which brings about the attachment of the said fixed part (14) to the said bodywork.

12. Method of manufacturing and/or assembling a closing device for a bay made in a motor vehicle roof according to any of claims 1 to 10, **characterised in that** said method comprises the following stages:
- the obtention of a closing device comprising a fixed part (61) and a movable glazed part (62) which is guided in rails so as to slide in relation to the fixed part;
- the attachment (65) of the said first end of the said nylon thread or threads to the said rail;
- the application of a glue joint (66) to the said face of the said fixed part which is turned towards the interior, covering the said second end of the said nylon thread or threads.

## Patentansprüche

1. Vorrichtung zum Verschließen einer Öffnung, die in einem Kraftfahrzeughimmel angebracht ist, die einen stationären Teil (14), der Schienen (12, 13) auf seiner zum Inneren des Fahrzeugs gerichteten Seite trägt, und mindestens einen beweglichen verglasten Teil (11) aufweist, der in den Schienen (12, 13) geführt wird, um in Bezug zu dem stationären Teil (14) zu gleiten, **dadurch gekennzeichnet, dass** sie mindestens ein Rückhaltelement (31, 41, 51) mindestens einer der Schienen (12, 13) aufweist, das mindestens einen Nylonfaden in I-Form mit einem Hauptverbindungsteil (311) und zwei sich senkrecht zu dem Hauptteil (311) erstreckenden Endteilen (312, 313), aufweist, von dem ein erster Endteil (312) an der Schiene (12, 13) befestigt ist und ein zweiter Endteil (313, 513) in einer Klebstoffnaht (22) eingegossen wird, welche die Befestigung des stationären Teils an der Karosserie sicherstellt.

2. Verschlussvorrichtung nach Anspruch 1, **dadurch gekennzeichnet, dass** das Rückhalteelement eine Metalllamelle (41) aufweist.

3. Verschlussvorrichtung nach einem der Ansprüche 1 und 2, **dadurch gekennzeichnet, dass** mindestens eines der Rückhalteelemente (31, 41, 51) erste Magnetisierungsmittel aufweist, und dass der stationäre Teil (14) zweite komplementäre Magnetisierungsmittel aufweist, um das Rückhalteelement (31, 41, 51) vorübergehend auf der Seite, die zu dem Inneren des Fahrzeugs gerichtet ist, zu halten.

4. Verschlussvorrichtung nach einem der Ansprüche 1 bis 3, **dadurch gekennzeichnet, dass** mindestens eines der Rückhalteelemente (31, 41, 51) Mittel aufweist, die das in der Schiene (12, 13) aufgefangene Wasser zum Äußeren des Fahrzeugs leiten.

5. Verschlussvorrichtung nach einem der Ansprüche 1 bis 4, **dadurch gekennzeichnet, dass** sie für jede der Schienen (12, 13) mindestens zwei der Rückhalteelemente (31, 41, 51,) der Schiene aufweist.

6. Verschlussvorrichtung nach Anspruch 1, **dadurch gekennzeichnet, dass** mindestens ein Rückhalteelement aus mindestens einem Abschnitt aus biegsamer Folie (68) ausgebildet ist, die sich auf einem Teil der Seite erstreckt, die zu dem Inneren des Fahrzeugs gerichtet ist.

7. Verschlussvorrichtung nach Anspruch 6, **dadurch gekennzeichnet, dass** der oder die Folienabschnitte (68) Löcher aufweisen, die dazu bestimmt sind, das Kleben der Schienen (62, 63) auf der stationären Platte (61) zu erleichtern.

8. Verschlussvorrichtung nach einem der Ansprüche 1 bis 7, **dadurch gekennzeichnet**, das mindestens zwei Rückhalteelemente miteinander verbunden sind.

9. Verschlussvorrichtung nach einem der Ansprüche 1 bis 8, **dadurch gekennzeichnet, dass** sie Verbindungsmittel gleichermaßen der beweglichen Tafel und mindestens einer der Schienen (94) aufweist, wenn die Schiene oder die Schienen von der stationären Platte gelöst und von den biegsamen Rückhalteelementen (95) zurückgehalten werden.

10. Verschlussvorrichtung nach einem der Ansprüche 1 bis 9, **dadurch gekennzeichnet, dass** sie auch mindestens ein Rückhalteelement mindestens eines anderen mechanischen Elements aufweist, das an der stationären Tafel befestigt ist, wie zum Beispiel ein seitlicher Querträger, ein Längsträger oder ein Abweiser.

11. Kraftfahrzeug, das eine Öffnung aufweist, die in seiner Karosserie eingerichtet ist, **dadurch gekennzeichnet, dass** es eine Verschlussvorrichtung der Fahrzeughimmelöffnung nach einem der Ansprüche 1 bis 10 aufweist, die einen stationären Teil (14), der Schienen (12, 13) auf seiner zu dem Inneren des Fahrzeugs gerichteten Seite trägt, und mindestens einen beweglichen verglasten Teil (11), der in den Schienen (12, 13) geführt wird, um in den Schienen in einer Ebene im Wesentlichen parallel zu der Ebene, die von dem stationären Teil (14) definiert wird, zu gleiten, und mindestens ein Rückhalteelement (31, 41, 51) mindestens einer der Schienen (12, 13) aufweist, das mindestens einen Nylonfaden in I-Form (311) aufweist, von dem ein erstes Ende (312, 512) an der Schiene (12, 13) befestigt ist, und von dem ein zweites Ende (313, 513) in einer Klebstoffnaht (22) eingegossen ist, welche die Befestigung des stationären Teils (14) an der Karosserie sicherstellt.

12. Verfahren zum Herstellen und/oder zur Montage einer Verschlussvorrichtung einer in einem Kraftfahrzeughimmel eingerichteten Öffnung, nach einem der Ansprüche 1 bis 10, **dadurch gekennzeichnet, dass** es die folgenden Schritte aufweist:
- Erhalten einer Verschlussvorrichtung, die einen stationären Teil (61) und einen beweglichen verglasten Teil (62), der in Schienen geführt wird, um in Bezug zu dem stationären Teil zu gleiten, aufweist;
- Befestigen (65) des ersten Endes des Nylonfadens oder der Nylonfäden auf der Schiene;
- Auftragen einer Klebstoffnaht (66) auf der Seite des stationären Teils, die zu dem Inneren gerichtet ist, wonach das zweite Ende des Nylonfadens oder der Nylonfäden abgedeckt wird.
